# EUROPÄISCHE PATENTSCHRIFT

(11) **EP 3 712 444 B1**
(45) Veröffentlichungstag und Bekanntmachung des Hinweises auf die Patenterteilung: **06.10.2021**
(21) Anmeldenummer: 20162129.9
(22) Anmeldetag: 10.03.2020
(51) Int. Cl.: F16B 5/00, B60L 50/60, F16B 5/07

(54) **PROFILVERBUND**
COMPOSITE PROFILE
COMPOSITE DE PROFILÉ

(30) Priorität: 20.03.2019 DE 202019101580 U
(43) Veröffentlichungstag der Anmeldung: 23.09.2020
(73) Patentinhaber: Otto Fuchs - Kommanditgesellschaft -, 58540 Meinerzhagen (DE)
(72) Erfinder: THOMZICK, Gerd, 51709 Marienheide (DE); ANDERS, Stefan, 58540 Meinerzhagen (DE); KERSTEN, Sebastian, 58540 Meinerzhagen (DE)
(74) Vertreter: Haverkamp, Jens

(56) Entgegenhaltungen:
- DE-A1- 2 510 211
- DE-A1- 3 806 091
- DE-A1-102016 213 832
- DE-U- 7 112 240
- DE-U1- 29 508 974
- US-A- 3 477 350

## Beschreibung

Die Erfindung betrifft einen Profilverbund hergestellt aus einem ersten Metallprofil und einem längsseitig mit dem ersten Profil durch Kaltfügen verbundenen zweiten Metallprofil, welche beiden Profile an ihren zueinander weisenden Längsseiten komplementäre Verklammerungsstrukturen zum Kaltfügen der beiden Profile tragen, wobei das erste Profil als Verklammerungsstruktur einen an einem Steg angeformten, durch eine größere Erstreckung in Profilquerrichtung in Bezug auf diejenige des Steges zu beiden Seiten des Steges jeweils eine Hinterschneidung bildenden Verklammerungskopf und die dazu komplementäre Verklammerungsstruktur des zweiten Profils eine Verklammerungskopfaufnahme zur Aufnahme eines Abschnittes des Verklammerungskopfes des ersten Profils und einen an einen Schenkel der Verklammerungskopfaufnahme angeformten Umklammerungsschenkel mit einem vor dem Kaltfügen abragenden ersten Profilarm und mit einem zweiten, daran winklig angeformten Profilarm aufweist, dessen freies Ende zum Hintergreifen des Verklammerungskopfes vorgesehen und vor der Kaltfügeverbindung zu einer durch den Steg begrenzten Verklammerungstasche des ersten Profils weist.

Ein aus einem ersten Metallprofil und einem längsseitig mit diesem durch Kaltfügen verbundenen zweiten Metallprofil hergestellter Profilverbund ist aus DE 20 2005 008 016 U1 bekannt. Bei diesem vorbekannten Profilverbund sind zwei Profile längsseitig in Richtung der Längserstreckung des Profils formschlüssig in der Ebene des Profilverbundes miteinander verbunden. Zu diesem Zweck ist an einen Gurt eines solchen Profils längsseitig jeweils eine Hakenleiste angeformt. Die durch die Hakenvorsprünge bewirkte Hakenausbildung der beiden miteinander in Eingriff zu stellenden Hakenleisten ist jeweils in die entgegengesetzte Richtung weisend, so dass die beiden Hakenleisten klauenartig mit ihren Hakenvorsprüngen miteinander in Eingriff gestellt werden können und in dem erstellten Profilverbund in dieser Art und Weise miteinander in Eingriff gestellt sind. Auf diese Weise sind die beiden Profile in der Profilebene quer zu ihrer Längserstreckung formschlüssig miteinander verbunden. Der Hakenvorsprung der Hakenleiste des ersten Profils ist durch einen Verankerungskanal bereitgestellt, in den durch einen Kaltfügeprozess der Hakenvorsprung der Hakenleiste des zweiten Profils in den durch den Verankerungskanal bereitgestellten Hinterschnitt eingreifend eingebogen wird. Bei diesem vorbekannten Profilverbund ist an die Hakenleiste zweiten Profils eine Stellleiste angeformt. Die Stellleiste ist rückseitig an die Hakenleiste bezüglich des Hakenvorsprunges angeformt. Vor Erstellen des Profilverbundes befindet sich diese in einer Stellung, damit durch eine Kraftbeaufschlagung quer zur Höhe der Profile diese zusammen mit dem Hakenvorsprung in den Hinterschnitt des Verankerungskanals des ersten Profils eingepresst werden kann. Die Stellleiste selbst ist in dem erstellten Profilverbund an einer dem Hakenvorsprung gegenüberliegenden Seitenwand des Verankerungskanals abgestützt, um die Stellleiste an dieser Stelle ihrer Längserstreckung folgend festzulegen. Damit stellt bei diesem Stand der Technik die Stellleiste zugleich die Klemmleiste des Profilverbundes dar.

Bei diesem vorbekannten Profilverbund greift der Hakenvorsprung der Hakenleiste, an den die Stellleiste angeformt ist, in den Hinterschnitt des Verankerungskanals des ersten Profils ein. Der Hakenvorsprung ist innerhalb des Verankerungskanals an diesem nicht abgestützt. Das Widerlager zu der Abstützung der Stellleiste an der Seitenwand des Verankerungskanals befindet sich an der Außenseite des Hakenvorsprungs des ersten Profils. Zwischen der Außenfläche der Stellleiste und dem Boden des Verankerungskanals verbleibt ein Spalt. Dieser kann, wenn eine Wasserdichtigkeit oder eine dämpfende Wirkung in dem Profilverbund erzielt werden soll, zum Einbringen einer Füllmasse genutzt werden.

Ein gattungsgemäßer Profilverbund ist aus DE 38 06 091 A1 bekannt. Bei diesem Profilverbund verfügt das erste Profil als Verklammerungsstruktur über einen Verklammerungskopf, angeformt an einen Steg, der von der Profilaußenseite in Richtung zum Profilinneren hin ausgerichtet ist. Das zweite Profil trägt als komplementäre Verklammerungsstruktur eine Verklammerungskopfaufnahme, in die zur Verklammerung der beiden Profile miteinander ein Abschnitt des Verklammerungskopfes eingreift. In Verlängerung des profilinnenseitigen Schenkels der Verklammerungskopfaufnahme ist ein Umklammerungsschenkel angeformt, der vor dem Kaltfügen aus der Profilebene nach innen abragt. Die Verklammerungskopfaufnahme ist dann in Querrichtung der Profillängserstreckung offen, so dass der Verklammerungskopf des anderen Profils darin eingeschoben werden kann. Verriegelt wird der mit einem Abschnitt in die Verklammerungskopfaufnahme eingreifende Verklammerungskopf durch Umlegen des Umklammerungsschenkels, dessen freies Ende in eine durch den Verklammerungskopf und den Steg gebildete Tasche eingreift. Durch Umformen des Umklammerungsschenkels wird eine unlösbare Verbindung der beiden Profile und damit der gewünschte Profilverbund hergestellt.

Zum Herstellen dieses vorbekannten Profilverbundes ist es erforderlich, dass die umzuformenden Verklammerungsstrukturen zum Erstellen des Profilverbundes an der Profilinnenseite angeordnet sind. Dieses erfolgt auch vor dem Hintergrund, dass die Außenseite des Profilverbundes eben sein soll. Dieses ist bei eingurtigen Profilen unproblematisch. In vielen Fällen handelt es sich bei einem solchen Profil jedoch um ein Hohlkammerprofil. Ein Zugang zu einer Stellleiste im Falle eines Profilverbundes gemäß DE 20 2015 008 016 U1 oder eines Umklammerungsschenkels im Falle der DE 38 06 091 A1 ist dann erschwert. In einem solchen Fall wird ein Ziehdorn verwendet, der zum Herstellen der Kaltfügeverbindung zwischen zwei Profilen durch die Hohlkammer hindurchgezogen wird.

Auch wenn sich ein solcher Profilverbund über Jahre bewährt hat, wäre es wünschenswert, diesen dahingehend zu verbessern, dass der Profilverbund nicht nur wasser- und gasdicht ist, ohne eine zusätzliche Dichtmasse in den Profilverbund einbringen zu müssen, sondern sich auch dazu eignet, dass die Kaltfügeverbindung trotz gewünschter ebener Außenseite des Profilverbundes bei einer Verbindung von zwei Hohlkammerprofilen die Herstellung des Profilverbundes vereinfacht ist.

Der Erfindung liegt somit die Aufgabe zugrunde, einen solchen Profilverbund bereitzustellen.

Gelöst wird diese Aufgabe erfindungsgemäß durch einen eingangs genannten, gattungsgemäßen Profilverbund, bei dem der Umklammerungsschenkel an den profiläußeren Schenkel der Verklammerungskopfaufnahme angeformt ist und bei dem die Verklammerungskopfaufnahme hinsichtlich der Auslegung ihrer lichten Weite und/oder der Verklammerungskopf bezüglich der Materialstärke des in die Verklammerungskopfaufnahme einzusetzenden Abschnittes in Richtung zur Sohle der Verklammerungskopfaufnahme verjüngt sind, wobei durch den zweiten Profilarm in Folge der Kaltfügeverbindung der in die Verklammerungskopfaufnahme des zweiten Profils eingepresste Abschnitt des Verklammerungskopfes in Profilquerrichtung zumindest bereichsweise mit der Verklammerungskopfaufnahme metallisch abgedichtet verbunden ist.

Bei diesem Profilverbund verfügt zum Herstellen desselben das zweite Profil über eine Verklammerungskopfaufnahme, dessen profiläußerer, die Außenseite dieses Profils bildender Schenkel in einen Umklammerungsschenkel übergeht, der vor dem Kaltfügen von der Profilaußenseite abragend angeordnet ist. Der Umklammerungsschenkel verfügt über einen ersten Profilarm. Dieser ist an dem profiläußeren Schenkel des Profils angeformt. Neben dem ersten Profilarm verfügt der Umklammerungsschenkel über einen zweiten, an dem ersten Profilarm winklig angeformten zweiten Profilarm, dessen freies Ende vor dem Kaltfügevorgang in Richtung einer Verklammerungstasche des ersten Profils weist. Die Verklammerungstasche ist durch einen den Verklammerungskopf tragenden Steg und einen Abschnitt des Verklammerungskopfes des ersten Profils bereitgestellt. Die Mittellängsebene des zweiten Profilarms ist gegenüber der Ebene der Profilaußenseite geneigt, und zwar in Richtung zu der Sohle der Verklammerungstasche hin. Der Umklammerungsschenkel ist aufgrund der Neigung der beiden Profilarme zueinander im Querschnitt im Wesentlichen V-förmig ausgeführt. Typischerweise sind die beiden Profilarme durch einen gekrümmt ausgeführten Verbindungsabschnitt miteinander verbunden. Die zu dem freien Ende des zweiten Profilarms des Umklammerungsschenkels hin offene Verklammerungstasche des ersten Profils verfügt über eine dem Verklammerungskopf gegenüberliegende Wandgeometrie, damit der zweite Profilarm durch den Vorgang des Kaltfügens in Richtung zu der Sohle der Verklammerungstasche und damit in Richtung zu dem zweiten Profil verstellt bzw. plastisch umgeformt wird. Diese Verstellbewegung geht einher mit einer auf die Sohle der Verklammerungstasche wirkenden Vorspannung, durch die der zum zweiten Profil weisende Abschnitt des Verklammerungskopfes in die Verklammerungskopfaufnahme eingepresst wird. Durch dieses Einpressen des in die Verklammerungskopfaufnahme des zweiten Profils eingreifenden Abschnitts des Verklammerungskopfes des ersten Profils wird die gewünschte Abdichtung zwischen dem Verklammerungskopf und der Verklammerungskopfaufnahme durch die beiden in Folge der Flächenpressung gegeneinander wirkenden Metallflächen bereitgestellt. Typischerweise entsteht eine Kaltpressschweißverbindung zwischen dem Verklammerungskopf und der Innenwand der Verklammerungskopfaufnahme. Die zum Ausbilden der metallischen Dichtung zusammenwirkenden Flächenbereiche der Verklammerungskopfaufnahme und des Verklammerungskopfes sind zu diesem Zweck so ausgelegt, dass infolge des Kaltfügeprozesses eine solche Flächenpressung zwischen den beiden Teilen herrscht, dass eine metallische Dichtung ausgebildet ist. Infolge dessen ist ein solcher Profilverbund ohne zusätzliches Füll- oder Abdichtungsmaterial gasdicht.

Bei diesem Profilverbund ist das Vorsehen einer ebenen Profilaußenseite möglich und typischerweise auch vorgesehen, obwohl sich der für den Profilverbund umzuformende Schenkel außenseitig befindet. Möglich ist dieses bei diesem Profilverbund, da sich die Verklammerungstasche in Querrichtung des ersten Profils zwischen dem Verklammerungskopf und demjenigen Gurt befindet, an den der den Verklammerungskopf tragende Steg angeformt ist. Mit anderen Worten: die Verklammerungstasche befindet sich zwischen dem die Profilaußenseite bildenden Gurt des ersten Profils und dem in Quererstreckung des ersten Profils über den eigentlichen Gurt hinausragenden Verklammerungskopf. Somit ist aus Blickrichtung der Profilaußenseite der Verklammerungskopf des ersten Profils beidseitig hinterschnitten, wobei die Hinterschneidung in Richtung zu dem Gurt des ersten Profils die Verklammerungstasche bildet. Daher kann der die Profilaußenseite des zweiten Profils bildende Umklammerungsschenkel um den Verklammerungskopf des ersten Profils herumgelegt und im Zuge des Kaltfügeverfahrens diesen in seine Verklammerungskopfaufnahme einpressen.

Als Profilaußenseite ist im Rahmen dieser Ausführungen diejenige Seite des Profils bzw. des daraus hergestellten Profilverbundes anzusehen, die eben ausgeführt sein bzw. ausgeführt ist. Die andere Profilseite ist dann die Profilinnenseite.

Zum Zwecke der Ausbildung einer metallischen Dichtung zwischen dem Verklammerungskopf und der Verklammerungskopfaufnahme sind zwei einander bezüglich des in die Verklammerungskopfaufnahme eingreifenden Teils des Verklammerungskopfes gegenüberliegende Kontaktflächenbereiche zum Ausbilden jeweils einer metallischen Dichtung in dem Profilverbund vorgesehen, und zwar zwischen der zur Profilaußenseite weisenden Seite des in die Verklammerungskopfaufnahme hineinreichenden Abschnittes des Verklammerungskopfes und seiner zur Profilinnenseite weisenden Seite, jeweils mit der gegenüberliegenden Wand der Verklammerungskopfaufnahme. Zu diesem Zweck ist entweder die lichte Weite der Verklammerungskopfaufnahme in Richtung zu ihrer Sohle und/oder der Verklammerungskopf in Richtung zu seinem in die Verklammerungskopfaufnahme weisenden Scheitel verjüngt. Vorzugsweise ist sowohl die lichte Weite der Verklammerungskopfaufnahme als auch der Verklammerungskopf verjüngt. In einer Ausgestaltung eines solchen Profilverbundes ist der Verjüngungswinkel der lichten Weite der Verklammerungskopfaufnahme und derjenige des Verklammerungskopfes zu seinem Scheitel hin gleich. Bei einer solchen Auslegung der komplementären Verklammerungsstrukturen stellen sich in Folge des Kaltfügepressvorganges nicht nur zwei metallische Dichtungsbereiche ein. Vielmehr ist dann die Erstreckung der Dichtfläche in Profilquerrichtung gesehen relativ groß. Um die für die metallische Dichtung erforderliche Flächenpressung mit den zur Verfügung stehenden Kräften aufzubringen, wird man die diesbezüglich zusammenwirkenden Strukturelemente aufeinander abstimmen. Bei einer geringeren Erstreckung der metallischen Dichtflächen in Profilquerrichtung ist eine größere Kraftkonzentration mit einer entsprechend höherem Flächenpressung möglich.

Um die maximale Flächenpressung auf die beiden einander in Querrichtung zur Bewegungsrichtung des Verklammerungskopfes in die Verklammerungskopfaufnahme hinein beabstandeten Kontaktflächenbereiche zu erreichen, sind diese beiden Verklammerungsstrukturteile so aufeinander abgestimmt, dass nach dem Kaltfügevorgang der Scheitel des Verklammerungskopfes von der Sohle der Verklammerungskopfaufnahme beabstandet ist. Dann geht der gesamte Bewegungsbetrag, mit dem der Verklammerungskopf in die Verklammerungskopfaufnahme durch den Vorgang des Kaltfügens eingepresst wird, in die gewünschte Flächenpressung. Insofern wird durch die Verjüngung eine Kraftumsetzung in Querrichtung zur Einpressrichtung des Verklammerungskopfes in die Verklammerungskopfaufnahme bewirkt.

Durch die Umformung des Umklammerungsschenkels bei dem Prozess des Kaltfügens wird die Umformkraft zu der vorbeschriebenen Bewegung des Verklammerungskopfes in die Verklammerungskopfaufnahme des zweiten Profils hinein bereit gestellt. Aus diesem Grund ist in einer bevorzugten Ausgestaltung die lichte Weite der Verklammerungstasche größer als die Materialstärke des darin eingebrachten zweiten Profilarms des Umklammerungsschenkels. Der Scheitel des zweiten Profilarms stützt sich an der Sohle der Verklammerungstasche ab. Durch das Kaltfügen wird der Neigungswinkel der Mittellängsebene des zweiten Profilarms des Umklammerungsschenkels gegenüber der Profilebene reduziert. Aus dieser Bewegung resultiert die vektorielle Bewegungskomponente, mit dem der Verklammerungskopf in die Verklammerungskopfaufnahme eingepresst wird. Nach dem Kaltfügen befindet sich der zweite Profilarm des Umklammerungsschenkels innerhalb der Verklammerungstasche und hintergreift somit den Verklammerungskopf an seiner in Profilquerrichtung gesehen der Verklammerungskopfaufnahme gegenüberliegenden Seite. Die beiden Profile stehen durch diese Anordnung in diesem Bereich der beiden miteinander in Eingriff gestellten Verklammerungsstrukturen klauenartig miteinander in Eingriff, wobei eine Abstützung in Profilquerrichtung allerdings nur zwischen dem Scheitel des zweiten Profilarms und der Sohle der Verklammerungstasche vorgesehen ist.

Nach dem Kaltfügen befindet sich der erste Profilarm des Umklammerungsschenkels in der Profilebene. Zwei miteinander auf diese Weise einen Profilverbund bildende Profile können daher eine in einer gemeinsamen Ebene befindliche Außenseite aufweisen. Vorteilhaft ist zudem, dass auf den Profilverbund wirkende Zugbelastungen nicht zu einer Verformung des ersten Profilarmes in seiner Raumlage in Bezug auf die daran angrenzenden Bestandteile des zweiten Profils führen. Eine Schwächung des Profilverbundes durch anliegende Zuglasten ist hierdurch wirksam verhindert. Durch den Vorgang des Umformens sind überdies die umgeformten Abschnitte des Umklammerungsschenkels typischerweise zumindest etwas kaltverfestigt. Auch dieses wirkt wirksam einem Aufbiegen in den Umformzonen entgegen. Während der Scheitelbereich zwischen dem ersten Profilarm und dem zweiten Profilarm des Umklammerungsschenkels einen ersten Umformbereich darstellt, befindet sich ein zweiter Umformbereich zwischen dem Umklammerungsschenkel und den angrenzenden Bestandteilen des zweiten Profils. Diese Biegezone wird gemäß einem Ausführungsbeispiel durch eine innenseitig angeordnete und der Längserstreckung des Profils folgende Kehlnut definiert. Diese befindet sich im Übergangsbereich von dem Umklammerungsschenkel in die angrenzenden Bestandteile des zweiten Profils.

Ist eine zusätzliche formschlüssige Fixierung des in die Verklammerungstasche des ersten Profils eingreifenden Umklammerungsschenkels des zweiten Profils gewünscht, ist an der außenseitigen Mündung der Verklammerungstasche des ersten Profils an der dem Verklammerungskopf gegenüberliegenden Seite ein Verriegelungswulst angeformt. Dieser steht vor dem Durchführen der Kaltfügeverbindung von der Außenseite dieses Profils ab. Vorzugsweise ist dieser Wulst in Richtung zum Verklammerungskopf hin etwas geneigt. Der Wulst ragt mit einer geringeren Höhe von dem ersten Profil ab als der Umklammerungsschenkel des zweiten Profils, wenn dieser zum Durchführen der Kaltfügeverbindung in die Mündung der Verklammerungstasche eingehängt ist. Im Zuge des Kaltfügens, bei dem die Fügekraft rechtwinklig zur Ebene der Außenseiten der beiden Profile aufgebracht wird, wird der Umklammerungsschenkel mit seinem vorderen Profilarm in die Verklammerungstasche eingedrückt. In demselben Vorgang wird anschließend der Verriegelungswulst gegen die Außenseite des Verklammerungsschenkels wirkend umgeformt, wodurch ein Hinterschnitt gebildet ist, in den der Umklammerungsschenkel eingreift. Der umgeformte Verriegelungswulst wirkt gegen die Außenseite des Umklammerungsschenkels, so dass auf diese Weise das Eingreifen des Umklammerungsschenkels in die Verklammerungstasche zudem formschlüssig gesichert ist.

Der vorbeschriebene Profilverbund eignet sich zum Verbinden von zwei einzelnen Profilen mit jeweils nur einem Gurt, ebenso wie zum Verbinden von Profilen mit einem Obergurt und einem Untergurt. Die Verklammerungsstrukturen befinden sich am Ende eines solchen Gurtes, typischerweise in der Ebene derselben. Durchaus können mehrere oder auch eine Vielzahl einzelner derartiger Profile zu einem Profilverbund zusammengesetzt werden, wobei jeweils zueinander benachbarte Profile das erste und zweite Profil des vorstehend nur anhand von zwei Profilen beschriebenen Profilverbundes bilden.

Als besonderer Vorteil, der aus der Möglichkeit des Außenfügens, das heißt: Des Aufbringens der für das Kaltfügen erforderlichen Kraft von außen resultiert, ist, dass nach innen abragende Stege und dergleichen dem auf die Außenseite wirkenden Umformwerkzeug nicht störend im Wege stehen. Vorteilhaft ist auch, dass Profile mit einem Untergurt und einem Obergurt, die endseitig durch einen Steg miteinander verbunden sind und somit eine U-förmige Aufnahme bilden, bereits mit einem oder mehreren Gegenständen bestückt in den Profilverbund eingebracht werden können. Dieses ist möglich, da für den Kaltfügepressvorgang keine Innenwerkzeuge benötigt werden. Aus diesem Grunde befindet sich der zwei Gurte verbindende Steg in der Flucht der maßgeblichen Krafteinleitung eines außenseitig anliegenden Presswerkzeuges, so dass der die Gurte verbindende Steg das Widerlager gegenüber der außenseitig aufgebrachten Umformkraft bereitstellt. Daher können auch empfindliche Gegenstände, wie beispielsweise Batteriemodule für elektromotorisch angetriebene Fahrzeuge in ein solches Profil eingesetzt sein, bevor dessen Aufnahme durch den Anschluss an ein benachbartes Profil längsseitig verschlossen wird. Ein Einsetzen von Gegenständen in ein solches Profil, beispielsweise Batteriemodule, kann unter Ausnutzung der elastischen Eigenschaften des Profils in Profilquerrichtung in einfacher Weise erfolgen, und zwar dadurch, dass die beiden Gurte an ihren nicht gegeneinander abgestützten Enden zum Vergrößern der Aufnahmeöffnung elastisch aufgebogen werden. Eine solche Montage ist sehr viel einfacher als ein nachträgliches Einschieben von solchen Gegenständen durch die offene Stirnseite nach Erstellen des Hohlprofilverbundes. Dieses gilt vor allem für solche, in einem solchen Profil unterzubringende Gegenstände, die genau wie dieses bei Batteriemodulen regelmäßig der Fall ist, verkabelt werden müssen. Die Verbindung eines Obergurtes mit einem Untergurt auch mit einem Doppelsteg ausgeführt sein, mithin mit zwei mit geringem Abstand zueinander angeordneten Stegen. Hierdurch wird eine Hohlkammer bereitgestellt. Bei einer solchen Ausgestaltung ist die Abstützung von Obergurt und Untergurt über eine größere Angriffsfläche verteilt. Zudem kann eine solche Hohlkammer etwa zum Durchführen von Kabeln oder dergleichen genutzt werden kann.

Lediglich zum Verschließen des letzten Profils eines solchen aus mehreren Profilen zusammengesetzten Profilverbundes dient ein Abschlussprofil, welches ohne Obergurt und Untergurt ausgeführt ist und mithin lediglich den die Verklammerungsstrukturen verbindenden Steg aufweist.

Die Erfindung ist nachfolgend anhand von Ausführungsbeispielen unter Bezugnahme auf die beigefügten Figuren beschrieben. Es zeigen:
- **Fig. 1:**: eine Detailansicht eines aus einem ersten Profil und einem zweiten Profil zu erstellenden Profilverbundes,
- **Fig. 2:**: der aus den beiden Profilen der Figur 1 hergestellte Profilverbund,
- **Fig. 3:**: ein Profilverbund aus zwei Profilen gemäß einer weiteren Ausgestaltung,
- **Fig. 4:**: die Profile des im Detail in Figur 3 gezeigten Profilverbundes vor dem Zusammenfügen derselben,
- **Fig. 5:**: die Darstellung der Figur 4 mit den aneinander montierten Profilen vor dem Durchführen des Kaltfügepressvorganges,
- **Fig. 6:**: die beiden Profile der Figur 5 nach dem Durchführen des Kaltfügepressvorganges, wobei an diese beiden Profile weitere identische Profile zum Ausbilden eines größeren Profilverbundes angeschlossen sind,
- **Fig. 7:**: die Profile der Figur 1 in einer Weiterbildung vor Durchführen der Kaltfügeverbindung und
- **Fig. 8:**: der aus den beiden Profilen der Figur 7 hergestellte Profilverbund.

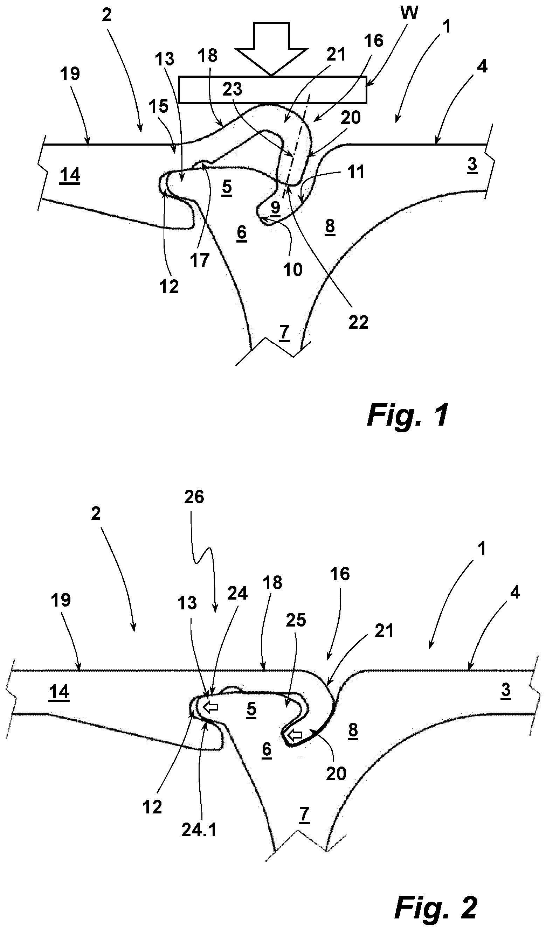

In Figur 1 sind die zueinander weisenden längsseitigen Enden eines ersten Profils 1 und eines zweiten Profils 2 gezeigt. Die beiden Profile 1, 2 sind bei dem dargestellten Ausführungsbeispiel aus einer Aluminiumlegierung hergestellt, wie diese für derartige, durch einen Kaltfügepressprozess zu verbindende Profile hinlänglich bekannt ist. Die beiden Profile 1, 2 sind Strangpressprofile. Das erste Profil trägt in Verlängerung seines in Figur 1 erkennbaren Gurtes 3, dessen Oberfläche 4 die Profilaußenseite darstellt, als Verklammerungsstruktur einen Verklammerungskopf 5. Der Verklammerungskopf 5 ist an einen Steg 6 angeformt, der wiederum an einen den Gurt 3 mit einem von diesem von seiner Oberfläche 4 wegweisend abragenden Profilsteg 7 verbindenden Übergangsabschnitt 8 angeformt ist. In der in Figur 1 gezeigten Profilquerrichtung kragt der Verklammerungskopf 5 über beide Seiten des Steges 6 hervor, so dass aus Blickrichtung der Profilaußenseite der Verklammerungskopf 5 beidseitig hinterschnitten ist. Der Abschnitt des Verklammerungskopfes 5, der den Steg 6 in Richtung zu dem Gurt 3 überkragt, bildet zusammen mit dem Steg 6 und der Außenwand des Übergangsabschnittes 8 zwischen Gurt 3 und Profilsteg 7 eine Verklammerungstasche 9. Dabei bildet der Steg 6 die Sohle 10 der Verklammerungstasche 9. Die von dem Übergangsabschnitt 8 bereitgestellte, die Verklammerungstasche 9 begrenzende Wand 11 ist bei dem in den Figuren 1 und 2 dargestellten Ausführungsbeispiel gekrümmt. Die Sohle 10 der Verklammerungstasche 9 weist grundsätzlich in Richtung zu dem zweiten Profil 2.

Das zweite Profil 2 trägt als Verklammerungsstruktur eine Verklammerungskopfaufnahme 12, in die der zu dem zweiten Profil 2 weisende Abschnitt 13 des Verklammerungskopfes 5 eingreift. Die Verklammerungskopfaufnahme 12 ist ebenso wie der darin eingreifende Abschnitt 13 des Verklammerungskopfes 5 in Richtung zu dem zweiten Profil 2 bzw. dessen Gurt 14 verjüngt. Die Verklammerungskopfaufnahme 12 wird durch einen gegabelten Endabschnitt des zweiten Profils 2 bereitgestellt. An den bezüglich der Verklammerungskopfaufnahme 12 profilaußenseitigen Schenkel 15 des zweiten Profils 2 ist ein insgesamt mit dem Bezugszeichen 16 gekennzeichneter Umklammerungsschenkel angeformt. Bei dem dargestellten Ausführungsbeispiel befindet sich an dem Übergang von dem Schenkel 15 in den Umklammerungsschenkel 16 an der Profilinnenseite eine Kehlnut 17. Durch diese ist eine Biegezone bereitgestellt. Der Umklammerungsschenkel 16 verfügt über einen ersten Profilarm 18, der gegenüber dem Schenkel 15 des zweiten Profils und damit gegenüber dessen Außenseite 19 vor dem Kaltfügevorgang abragend angeordnet ist. Der ersten Profilarm geht in einen zweiten Profilarm 20 über einen gerundet ausgeführten Verbindungsabschnitt 21 über, so dass der Umklammerungsschenkel 16 dieses Ausführungsbeispiels aufgrund der Neigung des Profilarms 20 gegenüber dem Profilarm 18 etwa V-förmig ist. Das durch den Scheitel 22 bereitgestellte freie Ende des zweiten Profilarms 20 weist in Richtung zu der Verklammerungstasche 9 des ersten Profils 1. Die Mittellängsebene des zweiten Profilarms 20 ist in Figur 1 mit dem Bezugszeichen 23 kenntlich gemacht. Die Mittellängsebene 23 ist gegenüber der durch die Oberfläche 4 gebildeten Ebene der Profilaußenseite geneigt, und zwar in Richtung zu dem Steg 6. Der Neigungswinkel beträgt bei dem dargestellten Ausführungsbeispiel etwa 75 - 80 °.

Figur 1 zeigt die beiden Profile 1, 2 in einer vormontierten Stellung. Zum Herstellen des Profilverbundes werden diese kaltgefügt, und zwar durch ein Pressverfahren, bei dem auf den Übergangsabschnitt 21 des Umklammerungsschenkels 16 eine Umformkraft, wie in Figur 1 schematisiert durch ein Werkzeug W und einen Blockpfeil angedeutet, aufgebracht wird. Dieses kann beispielsweise mittels eines Rollenumformwerkzeuges mit ein oder mehreren Umformstufen und somit mit einer oder mehreren Rollen vorgenommen werden. Als Widerlager hierzu dient eine unterseitige Abstützung. Für den Fall, dass das Profil einen Obergurt und einen Untergurt aufweist, die durch den vorbeschriebenen Steg miteinander verbunden sind und beide Gurte gleiche Verklammerungsstrukturen aufweisen, dient als Widerlager ein zweites Rollenumformwerkzeug der vorstehend genannten Art. Der Ort der Kraftbeaufschlagung liegt aufgrund der Konzeption der komplementären Verklammerungsstrukturen der beiden Profile 1, 2 in der Flucht des Profilsteges 7. Bei einer solchen Kraftbeaufschlagung wird der zweite Profilarm 20 in die Verklammerungstasche 9 des ersten Profils eingepresst, wobei der Übergang zwischen dem ersten Profilarm 18 und dem Schenkel 15 im Bereich der Kehlnut 17 plastisch umgeformt wird. Erreicht der Scheitel 22 des zweiten Profilarms 20 die in Richtung zum Steg 6 und damit in Richtung zur Sohle 10 gekrümmte Wand 11 wird die Neigung zwischen den beiden Profilarmen 18, 20 bzw. der von diesen eingeschlossene Winkel im Verbindungsabschnitt 21 ebenfalls durch plastische Umformung reduziert. Diese Biegezone befindet sich im Verbindungsabschnitt 21 des Umklammerungsschenkels 16. Der Scheitel 22 des zweiten Profilarms 20 wird durch die aufgebrachte Fügekraft an der als Stellfläche dienenden Wand 11 in Richtung zu der Sohle 10 der Verklammerungstasche 9 verstellt. Der Berührungskontakt zwischen dem zweiten Profilarm 20 und der Sohle 10 der Verklammerungstasche 9 stellt sich ein, bevor der erste Profilarm 18 in die Ebene des Gurtes 14 gebracht worden ist. Demzufolge führt der weitere Kaltfügepressvorgang, bei dem der erste Profilarm 18 in die Ebene des Gurtes 14 gebracht wird, zu einer durch die Umlenkung an der gekrümmten Wand 11 bewirkten Bewegung des Scheitels 22 des zweiten Profilarms 20 in Richtung zu der Verklammerungstasche 9. Die fortdauernd anliegende Kraftbeaufschlagung führt zu einem Zuziehen der Verklammerung durch sukzessives Verringern des von dem ersten Profilarm 18 und dem zweiten Profilarm 20 eingeschlossenen Winkels. Hieraus resultiert, wie in Figur 2 durch Blockpfeile angedeutet, eine auf den Steg 6 wirkende Bewegung, mit der der Abschnitt 13 des Verklammerungskopfes 5 in die Verklammerungskopfaufnahme 12 des zweiten Profils 2 eingepresst wird. Aufgrund der bereits vorbeschriebenen Neigung der Kontaktflächen zwischen der Verklammerungskopfaufnahme 12 und dem Abschnitt 13 des Verklammerungskopfes 12 stellt sich aufgrund der hohen Flächenpressung an den Kontaktbereichen eine metallische Dichtung ein. Die Neigung dieser Kontaktflächen ist relativ gering, sodass hierdurch eine Kraftuntersetzung zum Aufbringen der gewünschten Flächenpressung zum Erzielen der metallischen Dichtung bereitgestellt ist.

Der durch den vorbeschriebenen Prozess erstellte Profilverbund 26 von den beiden Profilen 1, 2 ist in Figur 2 gezeigt. Die Flächenbereiche, an denen sich eine metallische Dichtung ausgebildet hat, sind in Figur 2 mit den Bezugszeichen 24, 24.1 kenntlich gemacht. Deutlich zu erkennen ist, dass der in die Verklammerungskopfaufnahme 12 eingreifende Scheitel des Verklammerungskopfes 5 keinen Kontakt zur Sohle der Verklammerungskopfaufnahme 12 hat.

In gleicher Weise stützt sich der die Verklammerungstasche 9 bildende Abschnitt 25 des Verklammerungskopfes 5 auch nicht an der Innenseite des umgeformten Verbindungsabschnittes 21 des Umklammerungsschenkels 16 ab. Die Darstellung des Profilverbundes der Figur 2 lässt deutlich erkennen, dass eine Reduzierung des Winkels zwischen den beiden Profilarmen 18 und 20 des Umklammerungsschenkels 16 zu einer in die Sohle 10 des Steges 6 eingekoppelten Kraft führt, die, wie in Figur 2 durch den Blockpfeil kenntlich gemacht, in Richtung zu dem zweiten Profil 2 gerichtet ist. Diese Bewegungsrichtung entspricht derjenigen Bewegungsrichtung des Abschnittes 13 des Verklammerungskopfes 5, mit der dieser in die Verklammerungskopfaufnahme 12 eingepresst wird.

Der aus den Profilen 1 und 2 gebildete Profilverbund 26 weist eine in einer gemeinsamen Ebene befindliche Außenseite auf. Von Besonderheit ist, dass durch die Ausgestaltung des Umklammerungsschenkels 16 in dem Profilverbund 26 sogar eine Zugbeanspruchung des Profilverbundes 26 nicht zu einer Beeinträchtigung desselben führt, mithin die metallische Dichtung 24, 24.1 erhalten bleibt. Bei entsprechend hoher Flächenpressung zwischen dem Scheitel 22 des zweiten Profilarms 20 und der Sohle 10 der Verklammerungstasche 9 kann auch an dieser Stelle eine metallische Dichtung ausgebildet sein, wodurch die Abdichtung nochmals verbessert ist.

Das Vorsehen einer metallischen Dichtung zwischen den beiden Profilen 1, 2 ist dann gewünscht, wenn es sich bei den Profilen 1, 2 um Hohlkammerprofile handelt, deren Inneres gasdicht gegenüber der Umgebung abgeschlossen sein soll.

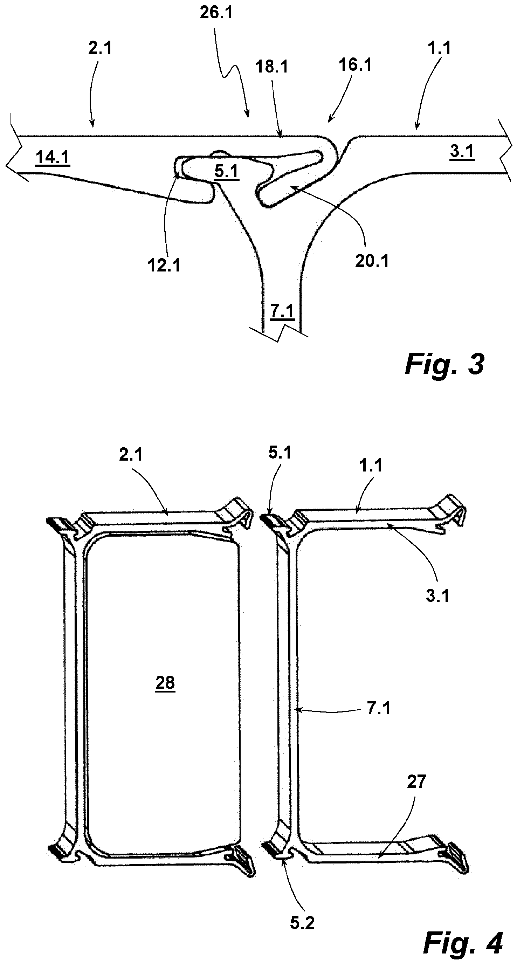

Figur 3 zeigt einen weiteren Profilverbund 26.1 mit einem ersten Profil 1.1 und einem zweiten Profil 2.1, welche beiden Profile 1.1, 2.1 prinzipiell gleich aufgebaut sind wie die Profile 1, 2 des zu den Figuren 1 und 2 beschriebenen Ausführungsbeispiels. Bei dem Profilverbund 26.1 ist die Dimensionierung des Verklammerungsschenkels 16.1 mit seinem ersten Profilarm 18.1 und seinem zweiten Profilarm 20.1 ebenso wie der Verklammerungskopf 5.1 etwas anders dimensioniert. Der Profilverbund 26.1 ist aus denselben Gründen, wie dieses zu dem Profilverbund 26 beschrieben ist, gasdicht und besonders dauerhaft miteinander verbunden. Die Ausführungen zu dem Profilverbund 26 der Figuren 1 und 2 gelten somit gleichermaßen für den Profilverbund 26.1 bzw. seine einzelnen Profile 1.1, 2.1.

Figur 4 zeigt die beiden Profile 1.1, 2.1, aus denen der Profilverbund 26.1 erstellt worden ist, in einer perspektivischen Ansicht und nicht nur mit dem in Figur 3 gezeigten Ausschnitt des seitlichen Endabschnittes seiner Gurte 3.1, 14.1. Die Profile 1.1, 2.1 sind identisch. Neben dem Obergurt 3.1 verfügen diese über einen Untergurt 27, die durch den Profilsteg 7.1 miteinander verbunden sind. Der Untergurt 27 trägt daher an seiner dem Verklammerungskopf 5.1 gegenüberliegenden Seite ebenfalls einen Verklammerungskopf 5.2. An den den Verklammerungsköpfen 5.1, 5.2 gegenüberliegenden Enden trägt das Profil 1.1 Verklammerungsstrukturen, wie diese zu dem zweiten Profil 2.1 beschrieben sind. Die beiden Profile 1.1, 2.1 sind lediglich in einer Scheibe dargestellt. Deren Längserstreckung ist jedoch wesentlich länger. Die Länge ist angepasst an die jeweiligen Einsatzzwecke. Die identischen Profile 1.1, 2.1 sind U-förmig. In das zweite Profil 2.1 ist in die U-förmige Aufnahme ein Gegenstand 28 eingesetzt, und zwar bereits bevor das zweite Profil 2.1 mit dem ersten Profil 1.1 kaltgefügt worden ist. Damit der Gegenstand 28, bei dem es sich beispielsweise um ein Batteriemodul handeln kann, nicht aus der Öffnung zwischen den beiden Gurten 3.1, 27 ohne Weiteres herausfällt, folgt der Gegenstand 28 bezüglich seiner Umrisskontur der Verjüngung des Aufnahmeraumes im Bereich des Überganges von dem Gurt 14.1 (bzw. 3.1) in die Gabelung zur Ausbildung der Verklammerungskopfaufnahme 12.1. Eine solche Vormontage von Gegenständen, wie beispielsweise bei dem Gegenstand 28 in dem Profil 2.1, ist bereits vor dem Fügen möglich, da durch das Fügen keine Wärme und auch kein Druck in die Profilaufnahme eingetragen wird.

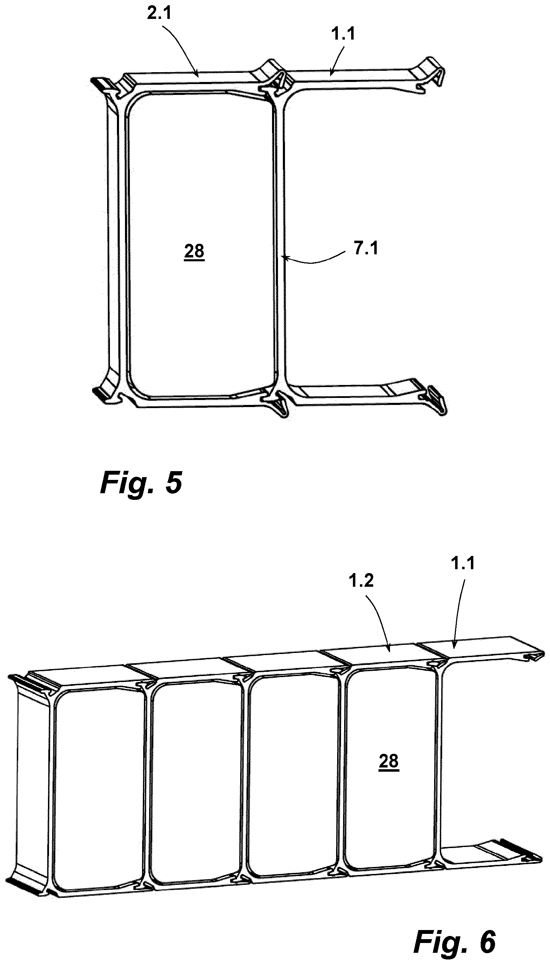

In einem ersten Schritt werden die Profile 1.1, 2.1 bezüglich ihrer Verklammerungsstrukturen, wie in Figur 5 gezeigt, in Eingriff miteinander gestellt. Diese Stellung der beiden Profile zueinander entspricht letztendlich der im Detail in Figur 1 gezeigten Stellung zwischen den beiden Profilen 1, 2. Diese Vormontagestellung kann sich dadurch auszeichnen, dass der zweite Profilarm 20.1 den Verklammerungskopf 5.1 bereits lose hintergreift, sodass eine Montage unter Ausnutzung der materialelastischen Eigenschaften möglich ist und diese nicht ohne Weiteres selbsttätig wieder auseinander fallen. Durch Aufbringen einer Presskraft wird der Profilverbund 26.1 hergestellt. Figur 6 zeigt die beiden Profile 1.1, 2.1 im Profilverbund, wobei an das Profil 2.1 weitere Profile dieser Art, bereits bestückt mit Gegenständen, in derselben Weise angeschlossen sind. Das Anschließen dieser weiteren Profile 2.1 kann in einem einzigen Fügeprozess oder in sukzessiv nacheinander durchgefügten Kaltfügepressvorgängen vorgenommen werden.

Auf diese Weise können beispielsweise Batterieeinhausungen, so genannte Batteriegehäuse für beispielsweise elektromotorisch betriebene Fahrzeuge hergestellt werden. Je nach dem benötigten Batterievolumen kann die Anzahl der miteinander zu verbindenden Profile bestimmt werden.

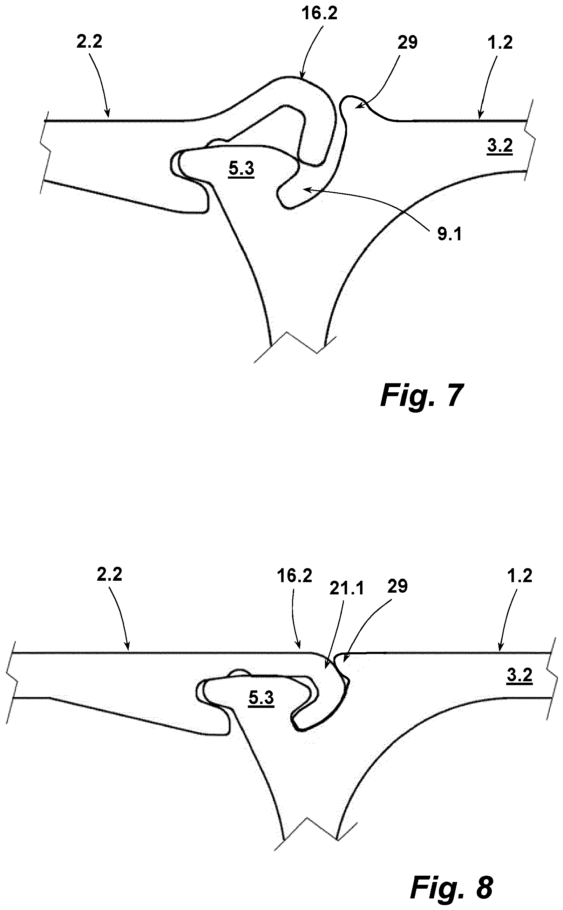

Figur 7 zeigt zwei weitere Profile 1.2, 2.2, die grundsätzlich aufgebaut sind wie die Profile 1 und 2 des Ausführungsbeispiels der Figuren 1 und 2. Soweit nachstehend nicht anders dargelegt, gelten die Ausführungen zu den Profilen 1, 2 gleichermaßen für die Profile 1.2, 2.2 ebenso wie für die Erstellung des Profilverbundes. Das Profil 2.2 ist identisch mit dem Profil 2. Das Profil 1.2 unterscheidet sich von dem Profil 1 dadurch, dass an seinen Gurt 3.2 im Bereich der Mündung der Verklammerungstasche 9.1 ein Verriegelungswulst 29 angeformt ist. Dieser ragt von der Außenseite des Profils 1.2 ab und ist in Richtung zur Verklammerungstasche 9.1 bzw. dem Verklammerungskopf 5.3. etwas geneigt. Die abragende Höhe des Verriegelungswulstes 29 ist geringer als das Maß des Abragens des Umklammerungsschenkels 16.2 des zweiten Profils 2.2 vor dem Kaltfügen.

Der aus den beiden Profilen 1.2, 2.2 erstellte Profilverbund ist in Figur 8 gezeigt. Infolge des Kaltfügeverfahrens, wie dieses zu dem Ausführungsbeispiel der Figuren 1, 2 erläutert ist, ist der Umklammerungsschenkel 16 mit seinem Profilarm in die Verklammerungstasche 9.1 eingepresst worden. Durch denselben Fügevorgang ist auch der Verriegelungswulst 29 umgeformt worden, so dass dieser am Abschluss des Kaltfügeprozesses an der Außenseite des Umklammerungsschenkels 16.2 anliegt, und zwar im Bereich seines Verbindungsabschnittes 21.1. Der Verriegelungswulst 29 wirkt gegen die Außenseite hinter dem Scheitel des Verbindungsabschnittes 21.1, so dass der Umklammerungsschenkel 16.2 mit einem Abschnitt in den durch den Verriegelungswulst 29 gebildeten Hinterschnitt eingreift. Durch diese Maßnahme ist der Umklammerungsschenkel 16.2 des zweiten Profils 2.2 formschlüssig in der Verklammerungstasche 9.1 fixiert, so dass dieser Profilverbund auch höheren Biegebeanspruchungen standhält.

Auch wenn in den vorstehend beschriebenen Ausführungsbeispielen mehrere identische Profile zum Ausbilden eines Profilverbundes beispielsweise einer Batterieeinhausung miteinander verbunden sind, versteht es sich, dass auch Profile unterschiedlicher Auslegung miteinander auf dieselbe Art verbunden werden können.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten diese umzusetzen, ohne dass dieses im Rahmen dieser Ausführungen im Einzelnen dargelegt werden müsste.

### Bezugszeichenliste

- 1, 1.1, 1.2: erstes Profil
- 2, 2.1, 2.2: zweites Profil
- 3, 3.1, 3.2: Gurt
- 4: Oberfläche
- 5, 5.1, 5.2, 5.3: Verklammerungskopf
- 6: Steg
- 7, 7.1: Profilsteg
- 8: Übergangsabschnitt
- 9, 9.1: Verklammerungstasche
- 10: Sohle
- 11: Wand
- 12, 12.1: Verklammerungskopfaufnahme
- 13: Abschnitt
- 14, 14.1: Gurt
- 15: Schenkel
- 16, 16.1, 16.2: Umklammerungsschenkel
- 17: Kehlnut
- 18, 18.1: Profilarm
- 19: Außenseite
- 20, 20.1: Profilarm
- 21, 21.1: Verbindungsabschnitt
- 22: Scheitel
- 23: Mittellängsebene
- 24, 24.1: metallische Dichtung
- 25: Abschnitt
- 26, 26.1: Profilverbund
- 27: Untergurt
- 28: Gegenstand
- 29: Verriegelungswulst

- W: Werkzeug

## Patentansprüche

1. Profilverbund hergestellt aus einem ersten Metallprofil (1, 1.1, 1.2) und einem längsseitig mit dem ersten Metallprofil (1, 1.1, 1.2) durch Kaltfügen verbundenen zweiten Metallprofil (2, 2.1, 2.2), welche beiden Profile (1, 2; 1.1, 2.1, 2.2) an ihren zueinander weisenden Längsseiten komplementäre Verklammerungsstrukturen zum Kaltfügen der beiden Profile (1, 2; 1.1, 2.1, 2.2) tragen, wobei das erste Profil (1, 1.1, 1.2) als Verklammerungsstruktur einen an einem Steg (6) angeformten, durch eine größere Erstreckung in Profilquerrichtung in Bezug auf diejenige des Steges (6) zu beiden Seiten des Steges (6) jeweils eine Hinterschneidung bildenden Verklammerungskopf (5, 5.1, 5.2, 5.3) und die dazu komplementäre Verklammerungsstruktur des zweiten Profils (2, 2.1, 2.2) eine Verklammerungskopfaufnahme (12, 12.1) zur Aufnahme eines Abschnittes (13) des Verklammerungskopfes (5, 5.1, 5.2, 5.3) des ersten Profils (1, 1.1, 1.2) und einen an einen Schenkel (15) der Verklammerungskopfaufnahme (12, 12.1) angeformten Umklammerungsschenkel (16, 16.1, 16.2) mit einem vor dem Kaltfügen abragenden ersten Profilarm (18, 18.1) und mit einem zweiten, daran winklig angeformten Profilarm (20, 20.1) aufweist, dessen freies Ende zum Hintergreifen des Verklammerungskopfes (5, 5.1, 5.2, 5.3) vorgesehen und vor der Kaltfügeverbindung zu einer durch den Steg (6) begrenzten Verklammerungstasche (9) des ersten Profils (1, 1.1, 1.2) weist, **dadurch gekennzeichnet, dass** der Umklammerungsschenkel (16, 16.1, 16.2) an den profiläußeren Schenkel (15) der Verklammerungskopfaufnahme (12, 12.1) angeformt ist und dass die Verklammerungskopfaufnahme (12, 12.1) hinsichtlich der Auslegung ihrer lichten Weite und/oder der Verklammerungskopf (5, 5.1, 5.2, 5.3) bezüglich der Materialstärke des in die Verklammerungskopfaufnahme (12, 12.1) einzusetzenden Abschnittes (13) in Richtung zur Sohle der Verklammerungskopfaufnahme (12, 12.1) verjüngt sind, wobei durch den zweiten Profilarm (20, 20.1) in Folge der Kaltfügeverbindung der in die Verklammerungskopfaufnahme (12, 12.1) des zweiten Profils eingepresste Abschnitt (13) des Verklammerungskopfes (5, 5.1, 5.2, 5.3) in Profilquerrichtung zumindest bereichsweise mit der Verklammerungskopfaufnahme (12, 12.1) metallisch abgedichtet verbunden ist.

2. Profilverbund nach Anspruch 1, **dadurch gekennzeichnet, dass** die Verjüngung mit gleichbleibendem Verjüngungswinkel ausgeführt ist.

3. Profilverbund nach Anspruch 1 oder 2, **dadurch gekennzeichnet, dass** der in die Verklammerungskopfaufnahme (12, 12.1) des zweiten Profils (2, 2.1, 2.2) einzusetzende Abschnitt (13) des Verklammerungskopfes (5, 5.1, 5.2, 5.3) des ersten Profils (1, 1.1, 1.2) eine Materialstärke aufweist, damit nach dem Kaltfügen der Scheitel des Verklammerungskopfes (5, 5.1, 5.2, 5.3) von der Sohle der Verklammerungskopfaufnahme (12, 12.1) beabstandet ist.

4. Profilverbund nach einem der Ansprüche 1 bis 3, **dadurch gekennzeichnet, dass** die Weite der Verklammerungstasche (9, 9.1) zumindest vor dem Kaltfügen größer ist als die Materialstärke des darin durch den Kaltfügeprozess einzubringenden zweiten Profilarms (20, 20.1) des Umklammerungsschenkels (16, 16.1), damit im Profilverbund (26, 26.1) der Scheitel des zweiten Profilarms (20, 20.1) an der Sohle (10) der Verklammerungstasche (9, 9.1) anliegt.

5. Profilverbund nach einem der Ansprüche 1 bis 4, **dadurch gekennzeichnet, dass** die die Verklammerungstasche (9, 9.1) profilseitig begrenzende Wand (11) als Stellfläche zum Einführen des zweiten Profilarms (20, 20.1) bei dem Vorgang des Kaltfügens in die Verklammerungstasche (9, 9.1) ausgeführt ist.

6. Profilverbund nach einem der Ansprüche 1 bis 5, **dadurch gekennzeichnet, dass** die Ebene der maximalen Erstreckung des Verklammerungskopfes (5, 5.1, 5.2, 5.3) in Profilquerrichtung sich innerhalb der Fortsetzung der Gurte (3, 14; 3.1, 14.1) der beiden Profile (1, 2; 1.1, 2.1; 1.2, 2.2) befindet.

7. Profilverbund nach einem der Ansprüche 1 bis 6, **dadurch gekennzeichnet, dass** die Mittellängsebene (23) des zweiten Profilarms (20, 20.1) des Umklammerungsschenkels (16, 16.1) gegenüber der Ebene der Profilaußenseite (19) in Richtung zu dem Gurt (14, 14.1) dieses Profils (2, 2.1, 2.2) geneigt ist.

8. Profilverbund nach Anspruch 7, **dadurch gekennzeichnet, dass** der durch den ersten Profilarm (18, 18.1) und den zweiten Profilarm (20, 20.1) des Umklammerungsschenkels (16, 16.1) eingeschlossene Winkel im Profilverbund kleiner ist als vor dem Kaltfügen der beiden Profile (1, 2; 1.1, 2.1; 1.2, 2.2) ist.

9. Profilverbund nach einem der Ansprüche 1 bis 8, **dadurch gekennzeichnet, dass** der zweite Profilarm des zweiten Profils (2, 2.1, 2.2) mit seinem freien Ende bei aneinander montierten Profilen (1, 2; 1.1, 2.1; 1.2, 2.2) vor dem Kaltfügen den Verklammerungskopf (5, 5.1, 5.2) des ersten Profils (1, 1.1, 1.2) lose hintergreift.

10. Profilverbund nach einem der Ansprüche 1 bis 8, **dadurch gekennzeichnet, dass** an der dem Verklammerungskopf (5.3) gegenüberliegenden Seite der Verklammerungstasche (9.1) ein Verriegelungswulst (29), von der Außenseite des ersten Profils (1.2) abragend angeordnet ist, der im Zuge der Kaltfügeverbindung gegen die Außenseite des Umklammerungsschenkels (16.2), einen Hinterschnitt bildend, in den der Umklammerungsschenkel (16.2) eingreift, wirkt.

11. Profilverbund nach einem der Ansprüche 1 bis 10, **dadurch gekennzeichnet, dass** beide Profile (1.1, 2.1) an ihrer einen Längsseite die ersten Verklammerungsstrukturen und an ihrer gegenüberliegenden Längsseite die zweiten, zu den ersten Verklammerungsstrukturen komplementären Verklammerungsstrukturen tragen.

12. Profilverbund nach Anspruch 11, **dadurch gekennzeichnet, dass** die beiden Profile (1.1, 2.1) einen Obergurt (3.1) und einen Untergurt (27) aufweisen und beide Gurte (3.1, 27) endseitig jeweils eine Verklammerungsstruktur tragen.

13. Profilverbund nach Anspruch 12, **dadurch gekennzeichnet, dass** die beiden Gurte (3.1, 27) nur im Bereich des die Verklammerungsköpfe (5.1) tragenden Endes durch einen Profilsteg (7.1) oder einen Doppelsteg miteinander verbunden sind.

14. Profilverbund nach Anspruch 13, **dadurch gekennzeichnet, dass** vor dem Kaltfügen zweier benachbarter Profile (3.1, 27) dasjenige Profil (2.1), dessen U-förmige Aufnahme durch den Profilsteg (7.1) des anderen Profils (S 1.1) verschlossen wird, mit zumindest einem darin aufzunehmenden Gegenstand (28) vor dem Kaltfügen bestückt ist.

15. Profilverbund nach Anspruch 14, **dadurch gekennzeichnet, dass** der Gegenstand zwischen den beiden Gurten durch von den Gurten auf den Gegenstand wirkende Vorspannung eingespannt ist.

16. Profilverbund nach einem der Ansprüche 13 bis 15, **dadurch gekennzeichnet, dass** mehrere miteinander verbundene Profile (1.1, 1.2) ein Batteriegehäuse zur Aufnahme von Batteriemodulen, insbesondere für den Betrieb eines elektromotorisch betriebenen Fahrzeuges bilden.

## Claims

1. Composite profile produced from a metal profile (1, 1.1 1.2) and a second metal profile (2, 2.1, 2.2) connected by cold-joining on a longitudinal side to the first metal profile (1, 1.1, 1.2), both of these profiles carrying complementing clamping structures on their longitudinal sides facing one another for the cold-joining of the two profiles (1, 2; 1.1, 2.1, 2.2), wherein the first profile (1, 1.1, 1.2) comprises as a clamping structure a clamping head (5, 5.1, 5.2, 5.3), formed at a web (6) and forming in each case an undercut, by way of a larger extension in the profile transverse direction in relation to that of the web (6), on both sides of the web (6), and the clamping structure complementary to this of the second profile (2, 2.1, 2.2) is configured to receive a clamping head receiver (12, 12.1) to receive a section (13) of the clamping head (5, 5.1, 5.2, 5.3) of the first profile (1, 1.1, 1.2) and a clasping limb (16, 16.1, 16.2) formed at a limb (15) of the clamping head receiver (12, 12.1), with a first profile arm (18, 18.1) projecting before the cold joining, and with a second profile arm (20, 20.1) formed at an angle to this, of which the free end is provided for engaging behind the clamping head (5, 5.1, 5.2, 5.3) and before the cold joining points towards a clamping pocket (9) of the first profile (1, 1.1, 1.2) delimited by the web (6), **characterised in that** the clasping limb (16, 16.1, 16.2) is formed at the profile outer limb (15) of the clamping head receiver (12, 12.1) and that the clamping head receiver (12, 12.1) tapers in respect of the arrangement of its clear width and/or the clamping head (5, 5.1, 5.2, 5.3) tapers in respect of the material thickness of the section (13) to be inserted into the clamping head receiver (12, 12.1) in the direction towards the base of the clamping head receiver (12, 12.1), wherein, by means of the second profile arm (20, 20.1,) following the cold joining, the section (13) of the clamping head (5, 5.1, 5.2, 5.3) pressed into the clamping head receiver (12, 12.1) is metallically connected at least in sections to the clamping head receiver (12, 12.1) with sealing effect in the profile transverse direction.

2. Composite profile according to claim 1, **characterised in that** the tapering is applied with a constant tapering angle.

3. Composite profile according to claim 1 or 2, **characterised in that** the section (13) of the clamping head (5, 5.1, 5.2, 5.3) of the first profile (1, 1.1, 1.2), to be inserted into the clamping head receiver (12, 12.1) of the second profile (2, 2.1, 2.2), exhibits a material thickness such that, after the cold joining, the crest of the clamping head (5, 5.1, 5.2, 5.3) is located at a distance from the base of the clamping head receiver (12, 12.1).

4. Composite profile according to any one of claims 1 to 3, **characterised in that** the width of the clamping pocket (9, 9.1) is, at least before the cold joining, greater than the material thickness of the second profile arm (20, 20.1) of the clasping limb (16, 16.1) to be introduced into it by the cold joining process, in order that, in the composite profile (26, 26.1) the crest of the second profile arm (20, 20.1) lies in contact with the base (10) of the clamping pocket (9, 9.1).

5. Composite profile according to any one of claims 1 to 4, **characterised in that** the wall (11) delimiting the clamping pocket (9, 9.1) on the profile side is configured as a placement surface for the introduction of the second profile arm (20, 20.1) into the clamping pocket (9, 9.1) during the cold joining process.

6. Composite profile according to any one of claims 1 to 5, **characterised in that** the plane of the maximum extension of the clamping head (5, 5.1, 5.2, 5.3) in the profile transverse direction is located inside the continuation of the belt (3, 14; 3.1, 14.1) of the two profiles (1, 2; 1.1, 2.1; 1.2, 2.2).

7. Composite profile according to any one of claims 1 to 6, **characterised in that** the middle longitudinal plane (23) of the second profile arm (20, 20.1) of the clasping limb (16, 16.1) is inclined in relation to the plane of the profile outer side (19) in the direction towards the belt (14, 14.1) of this profile (2, 2.1, 2.2).

8. Composite profile according to claim 7, **characterised in that** the angle enclosed by the first profile arm (18, 18.1) and the second profile arm (20, 20.1) of the clasping limb (16, 16.1) in the composite profile is smaller than before the cold joining of the two profiles (1, 2; 1.1 2.1; 1.2, 2.2).

9. Composite profile according to any one of claims 1 to 8, **characterised in that** the second profile arm of the second profile (2, 2.1, 2.2), before the cold joining, engages loosely with its free end behind the clamping head (5, 5.1, 5.2) of the first profile (1, 1.1, 1.2), with profiles (1, 2; 1.1, 2.1; 1.2, 2.2) mounted next to one another.

10. Composite profile according to any one of claims 1 to 8, **characterised in that** on the side of the clamping pocket (9.1) opposite the clamping head (5.3) a locking bead (29) is arranged, projecting from the outer side of the first profile (1.2), which in the course of the cold joining takes effect against the outer side of the clasping limb (16.2), forming an undercut into which the clasping limb (16.2) engages.

11. Composite profile according to any one of claims 1 to 10, **characterised in that** both profiles (1.1,2.1) carry on their longitudinal side the first clamping structures, and on their opposite longitudinal sides the second clamping structures, complementary to the first clamping structures.

12. Composite profile according to claim 11, **characterised in that** both profiles (1.1, 2.1) comprise an upper belt (3.1) and a lower belt (27), and both belts (3.1, 27) each carry a clamping structure on the end side.

13. Composite profile according to claim 12, **characterised in that** both belts (3.1, 27) are connected to one another only in the region of the end carrying the clamping head (5.1) by means of a profile web (7.1) or a double web.

14. Composite profile according to claim 13, **characterised in that,** before the cold joining of two adjacent profiles (3.1, 27), that profile (2.1) of which the U-shaped receiver is closed by the profile web (7.1) of the other profile (S 1.1) is provided with at least one object (28) to be received in it, before the cold joining.

15. Composite profile according to claim 14, **characterised in that** the object is tensioned between the two belts by the preliminary tension taking effect on the object by the belts.

16. Composite profile according to any one of claims 13 to 15, **characterised in that** several profiles (1.1, 1.2) connected to one another form a battery housing to receive battery modules, in particular for the operation of an electric motor-operated vehicle.

## Revendications

1. Assemblage de profilés fabriqué à partir d'un premier profilé métallique (1, 1.1, 1.2) et d'un second profilé métallique (2, 2.1, 2.2) relié longitudinalement au premier profilé métallique (1, 1.1, 1.2) par assemblage à froid, lesquels deux profilés (1, 2 ; 1.1, 2.1, 2.2) supportent sur leurs côtés longitudinaux orientés l'un vers l'autre, des structures d'accrochage complémentaires destinées à assembler à froid les deux profilés (1, 2 ; 1.1, 2.1, 2.2), le premier profilé (1, 1.1, 1.2) présentant en guise de structure d'accrochage, une tête d'accrochage (5, 5.1, 5.2, 5.3) moulée sur une âme (6), formant respectivement, grâce à une étendue plus grande dans le sens perpendiculaire au profilé si l'on se réfère à celle de l'âme (6), vers les deux côtés de l'âme (6), une contre-découpe et complémentaire à celle-ci; la structure d'accrochage du second profil (2, 2.1, 2.2) présentant un logement pour tête d'accrochage (12, 12.1) destiné à recevoir un tronçon (13) de la tête d'accrochage (5, 5.1, 5.2, 5.3) du premier profilé (1, 1.1, 1.2) et un montant d'accrochage par enveloppement (16, 16.1, 16.2) moulé sur un montant (15) du logement pour tête d'accrochage (12, 12.1) avec un premier bras de profilé (18, 18.1), en saillie, avant l'assemblage à froid, et avec un second bras de profilé (20, 20.1) moulé sur celui-ci de manière angulaire, dont l'extrémité libre est prévue pour s'engager derrière la tête d'accrochage (5, 5.1, 5.2, 5.3) et qui est orienté, avant la réalisation de l'assemblage à froid, vers une poche d'accrochage (9) du premier profilé (1, 1.1, 1.2) limitée par l'âme (6), **caractérisé en ce que** le montant d'accrochage par enveloppement (16, 16.1, 16.2) est moulé sur le montant (15) à l'extérieur du profilé, du logement pour tête d'accrochage (12, 12.1) et **en ce que** le logement pour tête d'accrochage (12, 12.1), par rapport à la configuration de sa largeur intérieure d'ouverture et/ou la tête d'accrochage (5, 5.1, 5.2, 5.3), par rapport à l'épaisseur du matériau du tronçon (13) à engager dans le logement pour tête d'accrochage (12, 12.1), se rétrécissent en direction du fond du logement pour tête d'accrochage (12, 12.1), le tronçon (13) de la tête d'accrochage (5, 5.1, 5.2, 5.3), lequel a été, à la suite de la réalisation de l'assemblage à froid, enfoncé par le second bras de profilé (20, 20.1) dans le logement pour tête d'accrochage (12, 12.1) du second profilé, étant solidarisé métalliquement de façon étanche dans le sens perpendiculaire au profilé, du moins par tronçons, avec le logement pour tête d'accrochage (12, 12.1).

2. Assemblage de profilés selon la revendication 1, **caractérisé en ce que** le rétrécissement est conformé avec un angle de rétrécissement constant.

3. Assemblage de profilés selon la revendication 1 ou 2, **caractérisé en ce que** le tronçon (13) de la tête d'accrochage (5, 5.1, 5.2, 5.3) du premier profilé (1, 1.1, 1.2) à engager dans le logement pour tête d'accrochage (12, 12.1) du second profilé (2, 2.1, 2.2) présente une épaisseur de matériau telle qu'après l'assemblage à froid, le sommet de la tête d'accrochage (5, 5.1, 5.2, 5.3) est à distance du fond du logement pour tête d'accrochage (12, 12.1).

4. Assemblage de profilés selon l'une des revendications 1 à 3, **caractérisé en ce que** la largeur de la poche d'accrochage (9, 9.1) est, au moins avant l'assemblage à froid, plus grande que l'épaisseur de matériau du second bras de profilé (20, 20.1) du montant d'accrochage par enveloppement (16, 16.1) qui doit y être engagé par le processus d'assemblage à froid, afin que dans l'assemblage de profilés (26, 26.1) le sommet du second bras de profilé (20, 20.1) est en appui contre le fond (10) de la poche d'accrochage (9, 9.1).

5. Assemblage de profilés selon l'une des revendications 1 à 4, **caractérisé en ce que** la paroi (11) délimitant la poche d'accrochage (9, 9.1) du côté du profilé est conformé en tant que surface d'ajustage pour engager, lors du processus d'assemblage à froid, le second bras de profilé (20, 20.1) dans la poche d'accrochage (9, 9.1).

6. Assemblage de profilés selon l'une des revendications 1 à 5, **caractérisé en ce que** le plan de l'étendue maximale de la tête d'accrochage (5, 5.1, 5.2, 5.3) se trouve dans le sens perpendiculaire du profilé, dans le prolongement de l'aile (3, 14 ; 3.1, 14.1) des deux profilés (1, 2 ; 1.1, 2.1 ; 1.2, 2.2).

7. Assemblage de profilés selon l'une des revendications 1 à 6, **caractérisé en ce que** le plan longitudinal central (23) du second bras de profilé (20, 20.1) du montant d'accrochage par enveloppement (16, 16.1) est incliné par rapport au plan de la face extérieure du profilé (19) en direction de l'aile (14, 14.1) de ce profilé (2, 2.1, 2.2).

8. Assemblage de profilés selon la revendication 7, **caractérisé en ce que** l'angle inclus par le premier bras de profilé (18, 18.1) et le second bras de profilé (20, 20.1) du montant d'accrochage par enveloppement (16, 16.1) est plus petit dans l'assemblage de profilés qu'avant l'assemblage à froid des deux profilés (1, 2 ; 1.1, 2.1 ; 1.2, 2.2).

9. Assemblage de profilés selon l'une des revendications 1 à 8, **caractérisé en ce que** le second bras de profilé du second profilé (2, 2.1, 2.2) saisit par l'arrière, avec du jeu, au moyen de son extrémité libre, la tête d'accrochage (5, 5.1, 5.2) du premier profilé (1, 1.1, 1.2) lorsque les profilés (1, 2 ; 1.1, 2.1 ; 1.2, 2.2) sont montés l'un contre l'autre, avant leur assemblage à froid.

10. Assemblage de profilés selon l'une des revendications 1 à 8, **caractérisé en ce que** sur le côté opposé à la tête d'accrochage (5.3) de la poche d'accrochage (9.1) est disposé un bourrelet de verrouillage (29) en saillie par rapport à la face extérieure du premier profilé (1.2), qui au cours de l'assemblage à froid agit contre la face extérieure du montant d'accrochage par enveloppement (16.2) en formant une contre-découpe, dans laquelle s'engage le montant d'accrochage par enveloppement (16.2).

11. Assemblage de profilés selon l'une des revendications 1 à 10, **caractérisé en ce que** les deux profilés (1.1, 2.1) supportent sur l'un de leurs côtés longitudinaux, les premières structures d'accrochage et sur leurs côtés longitudinaux opposés, les secondes structures d'accrochage complémentaires aux premières structures d'accrochage.

12. Assemblage de profilés selon la revendication 11, **caractérisé en ce que** les deux profilés (1.1, 2.1) présentent une aile supérieure (3.1) et une aile inférieure (27) et que les deux ailes (3.1, 27) supportent respectivement à leur extrémité une structure d'accrochage.

13. Assemblage de profilés selon la revendication 12, **caractérisé en ce que** les deux ailes (3.1, 27) sont reliées l'une à l'autre uniquement dans la zone de l'extrémité supportant la tête d'accrochage (5.1) par une âme de profilé (7.1) ou par une âme double.

14. Assemblage de profilés selon la revendication 13, **caractérisé en ce que,** avant l'assemblage à froid de deux profilés voisins (3.1, 27), le profilé (2.1) dont le logement en forme de U va être fermé par l'âme de profilé (7.1) de l'autre profilé (S 1.1) est équipé, avant l'assemblage à froid, d'au moins un objet (28) qui va y être logé.

15. Assemblage de profilés selon la revendication 14, **caractérisé en ce que** l'objet entre les deux ailes est serré par la tension préalable s'exerçant par les ailes sur l'objet.

16. Assemblage de profilés selon l'une des revendications 13 à 15, **caractérisé en ce que** plusieurs profilés (1.1, 1.2) assemblés les uns aux autres forment un logement à batterie destiné à recevoir des modules de batterie, notamment pour permettre le fonctionnement d'un véhicule entraîné par un moteur électrique.
